# EUROPEAN PATENT APPLICATION

(11) **EP 4 575 991 A1**
(43) Date of publication of application: **25.06.2025**
(21) Application number: 23219957.0
(22) Date of filing: 22.12.2023
(51) Int. Cl.: G06T 7/246, G06T 7/70

(54) **A METHOD FOR PROVIDING A FREE-SPACE ESTIMATION WITH MOTION DATA**

(71) Applicant: Zenseact AB, 417 56 Göteborg (SE)
(72) Inventor: NILSSON, Staffan, 414 72 Göteborg (SE); ERNST, Mathias, 414 73 Göteborg (SE); ADIL, Ömer Faruk, 447 34 Vårgårda (SE)
(74) Representative: Zacco Sweden AB

(57) **Abstract**

The present invention relates to a computer-implemented method (100), performed in a vehicle equipped with an automated driving system. The method (100) comprises: obtaining (S102) an image sequence captured by an image capturing device of the vehicle, wherein the image sequence comprises a plurality of images depicting a scene at a respective time instance of a plurality of time instances; obtaining (S104) a set of 3D points based on a depth map of the scene depicted in the image sequence, wherein each 3D point of the set of 3D points is associated with a three-dimensional position of the 3D point within the scene; determining (S106) motion data associated with each 3D point of the set of 3D points, wherein the motion data is indicative of an estimated motion of an object in the scene associated with the 3D point; and assigning (S116) the set of 3D points with associated motion data to a free-space estimation of the scene, based on the three-dimensional position associated with each 3D point.

## Description

### TECHNICAL FIELD

The present inventive concept relates to the field of autonomous vehicles. In particular, it is related to methods and devices for providing a free-space estimation with motion data.

### BACKGROUND

With the development of technology in recent years, image capturing and processing techniques have become widely used in different fields of technology. In particular, vehicles produced today are commonly equipped with some form of vision or perception system for enabling new functionalities. Moreover, an increasing portion of modern vehicles has advanced driver-assistance systems (ADAS) to increase vehicle safety and more generally road safety. ADAS - which for instance may be represented by adaptive cruise control (ACC), collision avoidance system, forward collision warning, lane support systems, etc. - are electronic systems that may aid a driver of the vehicle. Today, there is ongoing research and development within a number of technical areas associated to both the ADAS and the Autonomous Driving (AD) field. ADAS and AD may also be referred to under the common term Automated Driving System (ADS) corresponding to all of the different levels of automation as for example defined by the SAE J3016 levels (0 - 5) of driving automation.

One of the challenges facing autonomous or semiautonomous vehicles (i.e. ADS enabled vehicles) is the ability to accurately detect and navigate through their surrounding environments. To achieve this, the vehicle needs to be able to detect and assess the free-space around it, meaning the drivable area of the environment that is not occupied by any obstacles. This is important both for ensuring safety and for providing efficient navigation. The free-space estimation is often an instantaneous static view of the world obtained through sensor data collected by the vehicle, with no dynamic information. Since the driving environment is highly dynamic it is beneficial to also have information about velocity of objects in the surrounding environment of the vehicle.

Deriving a free-space estimation with velocity information is not a straight forward task, and also one that has to be performed online in the vehicle, having limited computational resources while still achieving desirable performance. There is therefore need for new and improved solutions in this field.

### SUMMARY

The herein disclosed technology seeks to mitigate, alleviate, or eliminate one or more of the above-identified deficiencies and disadvantages in the prior art to address various problems relating to free-space estimation. More specifically, the presently disclosed technology provides techniques for estimating motion of objects in a surrounding environment of a vehicle, for use in, and improvement of, free-space estimation.

The inventors have realized a new and improved way of doing this, which provides a balance between performance and computational cost. The presently disclosed technology at least partly builds on the concept of exploiting visual changes in optical flow in two-dimensional images for motion estimation, in combination with projection into three dimensions for later use in a free-space estimation. Previous ways of incorporation of motion data with free-space estimation have been built upon motion estimation of 3D points (e.g. a LIDAR point cloud) by calculation of the rate of change in their own past position, or by tracking how the cells of the free-space estimation itself moves over time. However, this does not only come with a high computational cost. It also introduces temporal noise between 3D points positional estimations between time instances when calculating the rate of change of historical positions. The herein disclosed technology may provide for improvements in regards to both of these aspects.

Various aspects and embodiments of the disclosed invention are defined below and in the accompanying independent and dependent claims.

According to a first aspect, there is provided a computer-implemented method, performed in a vehicle equipped with an automated driving system. The method comprises obtaining an image sequence captured by an image capturing device of the vehicle. The image sequence comprises a plurality of images depicting a scene at a respective time instance of a plurality of time instances. The method further comprises obtaining a set of 3D points based on a depth map of the scene depicted in the image sequence. Each 3D point of the set of 3D points is associated with a three-dimensional position of the 3D point within the scene. The method further comprises determining motion data associated with each 3D point of the set of 3D points. The motion data is indicative of an estimated motion of an object in the scene associated with the 3D point. The motion data associated with each 3D point is determined by: obtaining a 2D point in the image plane of an image of the image sequence corresponding to the 3D point, applying an optical flow between the image and a subsequent image of the sequence of images, to the 2D point, thereby obtaining a subsequent 2D point in an image plane of the subsequent image, determining a subsequent 3D point by projecting the subsequent 2D point based on the depth map of the scene, and determining the motion data based on a difference between the three-dimensional position of the 3D point and the subsequent 3D point. The method further comprises assigning the set of 3D points with associated motion data to a free-space estimation of the scene, based on the three-dimensional position associated with each 3D point.

As mentioned above, the disclosed technology may be that it provides a computationally favorable method which still can achieve desirable performance. It may further provide for improvements in real-time processing and reduction of computational complexity. More specifically, a sequence of images constitutes a more temporally smooth source for estimating the motion (compared to current ways of estimating motion of free-space estimations). So, by determining the motion data using image pixel motion in 2D on the image sequence, any temporal noise in the estimated motion data can be reduced. Later projecting the estimated motion data to 3D through the use of depth estimation may provide for more accurate fusion with the free-space estimation.

A further possible advantage of some embodiments is that is leverages readily available techniques, such as optical flow, making its implementation and execution more efficient in ADS-equipped vehicles. It may be implemented by reusing dedicated hardware or public software libraries already existing in the vehicle.

A further possible advantage of some embodiments is that the motion estimation can be further improved by introducing a constraint on the estimated motion. The constraint may be to include only motion that is parallel to an estimated ground plane. A reason for this is to further reduce the possible noise originating from 3D depth estimation by applying the assumption that all objects in the surrounding environment moves in directions generally parallel to the ground plane. With this constraint, the motion estimation may gain further robustness, and balance the 3D depth estimation noise by effectively filtering the past depth estimation to be closer to the current depth estimation.

According to a second aspect, there is provided a computer program product comprising instructions which when the program is executed by a computing device, causes the computing device to carry out the method according to any embodiment of the first aspect.

According to a third aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. Any of the above-mentioned features and advantages of the first aspect, when applicable, apply to the second and third aspect as well. In order to avoid undue repetition, reference is made to the above.

According to a fourth aspect, there is provided a device comprising control circuitry. The control circuitry is configured to obtain an image sequence captured by an image capturing device of the vehicle. The image sequence comprises a plurality of images depicting a scene at a respective time instance of a plurality of time instances. The control circuitry is further configured to obtain a set of 3D points based on a depth map of the scene depicted in the image sequence. Each 3D point of the set of 3D points is associated with a three-dimensional position of the 3D point within the scene. The control circuitry is further configured to determine motion data associated with each 3D point of the set of 3D points. The motion data is indicative of an estimated motion of an object in the scene associated with the 3D point. The motion data associated with each 3D point is determined by obtaining a 2D point in the image plane of an image of the image sequence corresponding to the 3D point, applying an optical flow between the image and a subsequent image of the sequence of images, to the 2D point, thereby obtaining a subsequent 2D point in an image plane of the subsequent image, determining a subsequent 3D point by projecting the subsequent 2D point based on the depth map of the scene, and determining the motion data based on a difference between the three-dimensional position of the 3D point and the subsequent 3D point. The control circuitry is further configured to assign the set of 3D points with associated motion data to a free-space estimation of the scene, based on the three-dimensional position associated with each 3D point. The above-mentioned features and advantages of the previous aspects, when applicable, apply to this fourth aspect as well. In order to avoid undue repetition, reference is made to the above.

According to a fifth aspect, there is provided a vehicle equipped with an automated driving system. The vehicle comprises an image capturing device. The vehicle further comprises the device according to any embodiment of the fourth aspect. The above-mentioned features and advantages of the previous aspects, when applicable, apply to this fifth aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will, in the following, be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method in accordance with some embodiments.
Figure 2 is a schematic illustration of a device in accordance with some embodiments.
Figure 3 is a schematic illustration of a vehicle in accordance with some embodiments.
Figure 4A illustrates, by way of example, a surrounding environment of a vehicle in perspective view.
Figure 4B illustrates, by way of example, a surrounding environment of a vehicle in side view.

### DETAILED DESCRIPTION

The present technology will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

As used herein, the wording "one or more of' a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

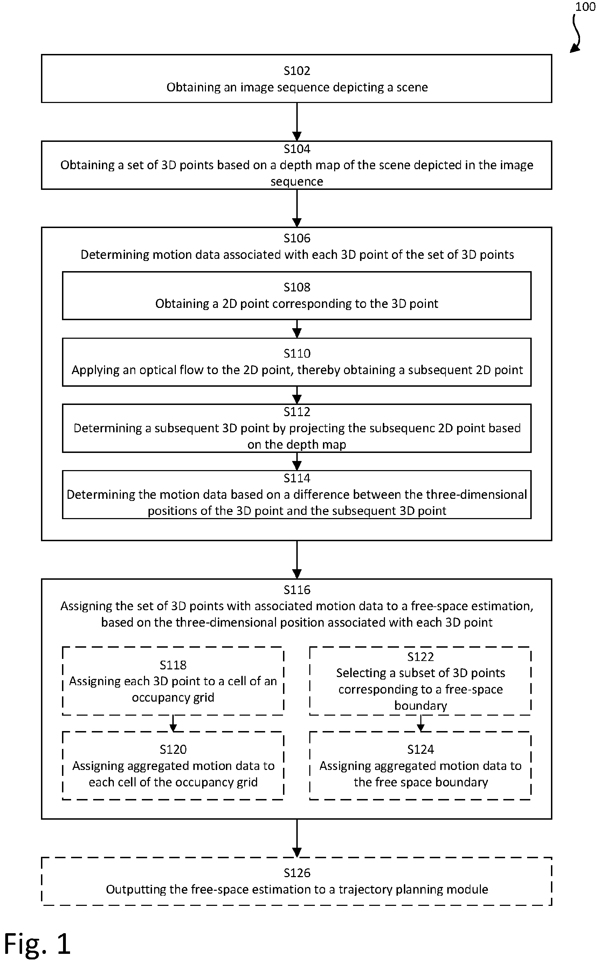

The presently disclosed technology generally relates to aggregation of motion data and free-space estimations in a vehicle equipped with an automated driving system, ADS. A method, device and vehicle enabled for the presently disclosed techniques will now be described with reference to Fig. 1 to Fig. 4B.

In the context of autonomous (or semi-autonomous) vehicles, "free space estimation" refers to the process of determining the availability and characteristics of unoccupied areas within the vehicle's surroundings. This estimation can be used for the vehicle's navigation and decision-making systems to ensure safe and efficient operation.

"Free-space" can thus be understood as parts of a road (or any road-like area) that are not occupied with any other object, and thus is "free". In other words, free-space refers to an area of the surrounding environment of the vehicle that is free of obstacles, such as other vehicles, pedestrians, buildings etc. Thus, free-space may be seen as parts of a road (e.g. the lane of the vehicle, or a neighboring lane in the same direction of travel) that are not occupied with any other object, and on which the vehicle can and/or is allowed to (e.g. in view of safety requirements, or traffic rules) drive on. This may also be referred to as "drivable free-space". Put differently, "free-space" may in some embodiments be interpreted as "drivable free-space".

The free-space estimation is typically determined online in the vehicle, as it is driving around, to assess the surrounding environment and any objects therein in real time. The goal can be to create a detailed map or representation of the unoccupied space, considering factors such as distance, size, and geometry of the objects. This process typically involves collection of sensor data, e.g. from sensors such as LiDAR, radar, cameras, or other perception devices. The collected sensor data is then processed through algorithms to distinguish between free space and non-free-space (i.e. obstacles). Some conventional methods of free-space estimation or determination rely on the use of different sensors of the vehicle to determine free-space in a three-dimensional representation of the world. One existing approach is to generate a depth image of the surrounding environment and from that determine the free-space from what appears to belong to the flat surface that is the ground. Another approach involves the use of machine learning models trained for image segmentation.

In some contexts, "non-drivable free-space" may be used to refer to parts of a road that is free, but on which the vehicle is not allowed to drive. Some examples of non-drivable free-space include an oncoming lane, a bike lane, a closed lane, a gravel shoulder of a road, and a grass shoulder of a road. Thus, free-space may, in some embodiments, comprise of both drivable free-space and non-drivable free-space. When, in some embodiments where "free-space" is used to refer to what above is described as "drivable free-space", what above is described as "non-drivable free-space" may be treated as "non-free-space". In other words, the non-drivable free-space may be part of the non-free-space.

Dividing an estimated "free-space" into "drivable free-space" and "non-drivable free-space" can be done by some further steps, such as utilizing map data or analyzing images or other types of sensor data to determine what traffic rules apply in the situation, or what kind of area it is (i.e. if it's a lane, a shoulder of the road, a refuge island, etc.). For example, image analysis techniques may be used to determine what is a road, and what is a non-drivable area next to the road. Such steps may be part of some embodiments, as will be explained further below.

The area corresponding to the free-space can be represented in different ways, for example as a list of points describing the boundary between drivable and non-drivable space, or as an occupancy grid in the ground plane comprising a plurality of grid cells, where each cell carries some information on the drivability of that particular cell, for example the probability of a cell being free/unoccupied.

The free-space estimation may also account for dynamic elements, such as moving objects, to adapt in real-time to changes in the surroundings. In particular, the free-space estimation may comprise motion data (such as velocity) of any objects in the surrounding environment. The motion data provides information about an estimated motion behavior of the objects. If assigned to the free-space estimation, the motion data may e.g. indicate the dynamic behavior of any free-space boundaries. This information can in turn be used to distinguish between static vs dynamic objects, slow vs fast-moving, or objects moving towards vs away from the vehicle, and then be used during trajectory or braking decisions. For instance, a free-space boundary corresponding to a vehicle ahead of the ego-vehicle with a similar relative motion as the ego vehicle, may allow for a softer brake, whereas a free-space boundary corresponding to a slowing down vehicle, a stationary vehicle (or any other object), or even a vehicle coming towards the ego-vehicle may trigger a harsher brake. Thus, this additional information about the dynamic behavior on top of the positional information of the free-space may provide for improvements e.g. in regards to functionality, safety, comfort and capability of any subsequent tasks utilizing the free-space estimation.

Figure 1 is a schematic flowchart representation of a method 100 in accordance with some embodiments. More specifically, the method 100 may be a method 100 for providing a free-space estimation with estimated motion data. Put differently, the method 100 may be a method 100 for estimating free-space with motion data, in an ADS equipped vehicle, or a method 100 for assigning motion data to a free-space estimation.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S102 and S104 may be performed in any order or at any point in time, based on a specific realization. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The above mentioned and described embodiments are only given as examples and should not be limiting to the present invention. Other solutions, uses, objectives, and functions within the scope of the invention as claimed below described patent claims should be apparent for the person skilled in the art. It should be appreciated that the steps which are comprised in dashed lines in Fig. 1 are examples of a number of optional steps which may form part of a number of alternative embodiments. The optional steps need not be performed in order. Furthermore, it should be appreciated that not all of the steps need to be performed. The example steps may be performed in any order and in any combination.

The method 100 comprises obtaining S102 an image sequence captured by an image capturing device of the vehicle. The image sequence comprises a plurality of images depicting a scene at a respective time instance of a plurality of time instances. The image sequence (may also be referred to as a sequence of images or a series of images) may be seen as a stream of image frames (e.g. a video stream) of the scene. The image sequence may comprise at least two images depicting the scene at a respective time instance. More specifically, the image sequence may comprise a first image depicting the scene at a first time instance, and a second image depicting the scene at a second time instance. The first and second time instance being two subsequent time instances.

The image capturing device may e.g. be one or more cameras arranged on the vehicle. An image of the image sequence may be an image captured by one of the one or more cameras. In other words, the images may be monocular images. Alternatively, the image may be an image fused from images captured by two or more of the one or more cameras. Thus, the image may e.g. be a stereo image.

The term "obtaining" is throughout the present disclosure to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.

The image sequence may e.g. be received directly from the image capturing device. Alternatively, or in combination, the image sequence may be received from a memory (e.g. an intermediate storage) at which the image sequence captured by the image capturing device is stored.

The scene may be understood as a portion of a surrounding environment of the vehicle, that is depicted in the images of the image sequence. Put differently, the scene may be understood as at least part of the surrounding environment of the vehicle. Thus, the scene comprises any objects in the surroundings of the vehicle. The surrounding environment of a vehicle is to be understood as a general area around the vehicle in which objects (such as other vehicles, landmarks, obstacles, etc.) can be detected and identified by vehicle sensors (RADAR, LIDAR, cameras, etc.), i.e. within a sensor range of the vehicle.

The method 100 further comprises obtaining S104 a set of 3D points based on a depth map of the scene depicted in the image sequence. Put differently, the 3D points of the set of 3D points may be defined by the depth map. Each 3D point of the set of 3D points is associated with a three-dimensional position of the 3D point within the scene. The three-dimensional position may be a position within a reference frame of the vehicle, or of the image capturing device of the vehicle. The three-dimensional position may thus be in a 3D coordinate space.

The 3D points may also be referred to as reference points. Each 3D point may correspond to a sub-portion of an image, such as a pixel or sub-set of pixels of the image. Moreover, each 3D point may be associated with an object in the scene (i.e. an object depicted in an image of the image sequence). It is to be noted that one or more 3D points of the set of 3D points may be associated with different parts of a same objects.

Once obtained, the 3D points can be defined using a set of numerical metrics, such as a location in an image plane, together with depth estimation. Alternatively, or in combination, the 3D point may be defined by three coordinates in a 3D reference frame. Identification and tracking of the 3D points may then allow for tracking of the object associated with the 3D point over time.

The depth map should herein be construed as a representation of depth of an image, or image sequence. The depth map can thus be seen as adding the third dimension (to the already existing two dimensions of a 2D image plane). The depth thus herein refers to a distance between the image capturing device, and a depicted object.

The depth map may comprise a depth value for each pixel of the image, or for a subset of pixels, indicating how far away the corresponding object is from the camera. For the purpose of the present technology, the depth map comprises at least depth information of the set of 3D points. Thereby, the depth map can provide information about the spatial relationships and distances between different objects in a depicted scene. Determining the depth data can be done using any conventional techniques, such as stereo vision utilizing a stereo camera setup, LIDAR, RADAR, computer vision algorithms or neural networks.

For example, the depth map may be based on an output of a machine learning model configured to determine a depth map based on an image sequence as input. Thus, the depth map, and consequently the set of 3D points, may be obtained as an output of the machine learning model being fed with the image sequence, or an image thereof. The step of obtaining S104 the set of 3D points may thus encompass generating the set of 3D points by feeding the image sequence to the machine learning model. The machine learning model may be trained using images, optionally in combination with LIDAR data.

Alternatively, or in combination, the depth map may be based on a LIDAR point cloud of the scene. Put differently, the set of 3D points may correspond to the LIDAR point cloud of the scene. Thus, the step of obtaining S102 the image sequence and the step of obtaining S104 the set of 3D points may be performed concurrently, by collecting the relevant sensor data (i.e. images captured by the image capturing device, and a LIDAR point cloud captured by a LIDAR sensor of the vehicle) as the vehicle travels along a road.

It is to be appreciated that a combination of different techniques for obtaining the depth map may be used. For example, stereo images can be utilized in combination with the techniques described above to provide further signal about the depth of the scene.

The method 100 further comprises determining S106 motion data associated with each 3D point of the set of 3D points. The motion data is indicative of an estimated motion of an object in the scene associated with the 3D point. The motion data may comprise information pertaining to a velocity of the object in the scene. In other words, the motion data may be velocity data. The velocity data may be indicative of a velocity of the object in the scene. Alternatively, or in combination, the motion data may comprise information pertaining to an acceleration of the object in the scene. The motion data may comprise information about a direction of motion, and/or a magnitude of the motion (e.g. a velocity or acceleration value).

In the broadest sense, the motion data associated with each 3D point may be determined based on a motion of objects in the scene determined in two dimensions from subsequent images of the sequence of images. Put differently, the motion data may be determined by a two-dimensional optical flow between at least two subsequent images. A more specific example of how the motion data may be determined will be given in the following.

For each 3D point of the set of 3D points, the motion data associated with a 3D point is determined S106 by the following steps denoted S108 to S114. First, a 2D point in the image plane of an image of the image sequence corresponding to the 3D point is obtained S108. The 2D point should herein be understood as a representation of the 3D point, but in two dimensions. More specifically, the 2D point can be represented by an x and y coordinate in an image plane of the image. The image plane referring to the 2D coordinate system spanned by the two axes of a 2D image. In other words, a 2D space where the visual information of the image is represented.

Next, an optical flow between the image and a subsequent image of the sequence of images, is applied S110 to the 2D point. Put differently, an image motion vector determined for the image and the subsequent image may be applied to the 2D point. The optical flow, or image motion vector, may herein be interpreted as information describing a motion of objects in the scene between subsequent images of the image sequence. By applying the optical flow to the 2D point, a subsequent 2D point in an image plane of the subsequent image can be obtained. The subsequent 2D point should herein be understood as a 2D point in the subsequent image, corresponding to the 2D point in the (previous) image referred to above. The 2D point and the subsequent 2D point may correspond to each other in the sense that they are associated with a same object in the scene. Applying the optical flow (or the image motion vector) may thus be seen as transforming the 2D point from the image to the subsequent image.

The optical flow herein refers to a technique commonly used to describe image motion. It is typically applied to a series (or sequence) of images that have a small time-step between them, for example, video frames. Optical flow calculates a motion (e.g. a velocity) for points within the images, and provides an estimation of where points could be in the next image sequence. More specifically, it can use two consecutive camera images to match points or groups of pixels between the images, and then provides a motion vector indicating the amount and direction of the motion in the image based on how the groups of pixels has moved. This can be done via a local search for the best match, e.g. by looking at intensities in the images. Given the displacement of the groups of pixels (i.e. direction and distance) and knowing the time frame between the images, the velocity can be calculated. To reduce the number of calculations required, the maximum displacement of a point can be set. The calculated optical flow between the two images may then be represented by a vector field spanning over the image plane. The vector field may be of coarser resolution than the original image, as groups of pixels can be matched, rather than individual pixels to reduce calculation cost. Applying S110 the optical flow to the 2D point may thus be formulated as applying S110 the optical flow vector field to the 2D point. As is readily understood, there are several ways of implementing an optical flow calculation, any of which may be applicable to the present technology.

Next, a subsequent 3D point is determined S112 by projecting the subsequent 2D point based on the depth map of the scene. Put differently, the subsequent 2D point may be projected or transformed, into three dimensions using the depth map. The subsequent 3D point may thus be determined by adding a third coordinate (e.g. a z-coordinate) to the subsequent 2D point to describe the depth in the image. In other words, the subsequent 2D point may be projected from the 2D image plane to a 3D coordinate space. The resulting subsequent 3D point may be seen as a 3D point in the subsequent image, corresponding to the 3D point in the (previous) image referred to above.

Next, the motion data is determined S114 based on a difference between the three-dimensional position of the 3D point and the subsequent 3D point. In other words, a three-dimensional motion of the object associated with the 3D point and the subsequent 3D point can be determined.

In some embodiments, determining S106 (or the step denoted S114) the motion data further comprises obtaining an estimation of a ground plane of the scene depicted in the sequence of images. The estimation of the ground plane (or ground plane estimation) may be obtained through any suitable known technique for estimating a plane in one or more images, including, but not limited to, stereo vision techniques, LIDAR point cloud, and machine learning based techniques. The motion data may then be determined S106 as a motion parallel to the estimated ground plane. For example, in the above step denoted S114, the difference between the three-dimensional position of the 3D point and the subsequent 3D point can be determined as the difference in a plane parallel to the estimated ground plane. Requiring the motion to be parallel with the estimated ground plane may serve as a constraint on the determined motion data. By restricting the motion data to motion in a plane parallel to the estimated ground plane, noise in the determined motion data can be reduced.

In some embodiments, the motion data is indicative of an estimated motion of the object in the scene associated with the 3D point, relative a motion of the vehicle. Thereby, information about whether how the objects moves in relation to the vehicle can be obtained. This may be advantageous in that it may require less complicated calculations, as the motion of the vehicle itself need not to be taken into account.

In some embodiments, the motion data is determined S106 further based on vehicle motion data of the vehicle. In other words, the motion of the vehicle may be taken into account when determining the motion data of the 3D points of the set of 3D points associated with the objects in the scene. The motion data may then be further indicative of an estimated motion of the object in the scene associated with the 3D reference point relative the ground.

The vehicle motion data of the ego vehicle may comprise information pertaining to an angular (or turning) motion of the vehicle (i.e. in yaw, pitch, and/or roll). The vehicle motion data may further comprise information pertaining to a translational motion (e.g. in a forwards and backwards motion).

By determining the motion relative the ground allows for differentiating dynamic objects from static objects in the scene. By dynamic objects, it is herein meant objects which has a motion relative both the ego-vehicle, and the ground. Examples of dynamic objects can be moving vehicles, cyclists, pedestrians, or any other road user, as well as animals or other moving inanimate objects. In turn, static object herein refers to objects which has motion relative the ego vehicle (due to the motion of the ego vehicle itself) but is in stand-still (or near-zero motion) in relation to the ground. Examples of static objects can be parked cars, road barriers, road debris, etc. This may improve any subsequent task utilizing the motion data as different actions may be taken, depending on whether an object is a static or dynamic object.

The method 100 further comprises assigning S116 the set of 3D points with associated motion data to a free-space estimation of the scene. The set of 3D points is assigned S116 to the free-space estimation based on the three-dimensional position associated with each 3D point. Put differently, each 3D point may be assigned to the cell in which the 3D point falls.

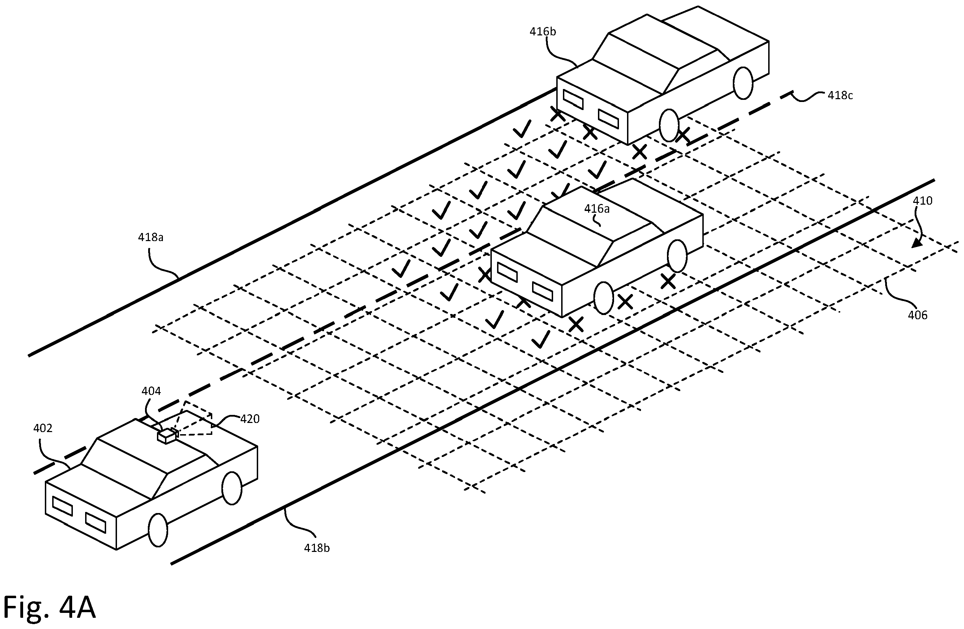

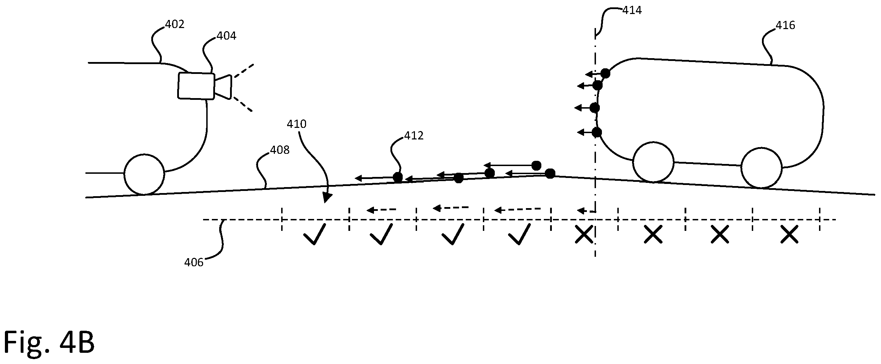

The free-space estimation can be seen as a 2D representation in 3D coordinates, meaning it is defined by coordinates in 3D, but constrained to a plane. Fig. 4 further illustrates this by way of example. Moreover, as stated above, the free-space estimation may be represented as (or comprise) a list of points describing the boundary between drivable and non-drivable space (also referred to as free-space boundary), and/or as an occupancy grid in the ground plane. The occupancy grid may be formed by a two-dimensional grid in a plane parallel with the ground plane. The grid may comprise a plurality of grid cells (or just "cells"). The free-space boundary may then be formed by a list of cells of the occupancy grid at which the boarder between free-space and non-free space occurs. Alternatively, the list of points of the free-space boundary may be stand-alone from the cells of the occupancy grid. In such case, the points (or boundary points) may be represented by 2D or 3D coordinates of their location within the scene. The step of assigning S116 the set of 3D points to the free-space estimation may be done differently, depending on the specific representation of the free-space estimation.

In some embodiments, assigning S116 the set of 3D points with associated motion data to the free-space estimation of the scene may comprise assigning S118 each 3D point of the set of 3D points to a cell of a plurality of cells in an occupancy grid of the free-space estimation, based on the three-dimensional position of the 3D points. Assigning S116 the set of 3D points with associated motion data to the free-space estimation of the scene may then further comprise assigning S120, to each cell in the occupancy grid, aggregated motion data based on the motion data associated with the 3D points assigned to the respective cell. The aggregated motion data of a cell may e.g. be determined as an average, or median value of the motion data associated with the 3D points assigned to said cell. Motion data may e.g. be averaged by averaging its direction and magnitude separately. It is however to be appreciated that other ways of forming the aggregated motion data may be used as well. As an example, a weighted average may be used. Moreover, any outliers among the 3D points assigned to a cell may be removed for improved results. Additionally, a standard deviation of the 3D points within a cell can be used as a confidence score.

In some embodiments, assigning S116 the 3D points with associated motion data to the free-space estimation of the scene may comprise selecting S122 a subset of the set of 3D points corresponding to a free-space boundary of the free-space estimation. Assigning S116 the 3D points with associated motion data to the free-space estimation of the scene may then further comprise assigning S124 aggregated motion data to the free-space boundary based on the subset of 3D points. In other words, an aggregated motion data may be assigned to a free-space boundary, based on the motion data of the 3D points belonging to said free-space boundary. The aggregated motion data of the free-space boundary may e.g. be determined as an average, or median value of the motion data associated with the 3D points belonging to said free-space boundary. It is however to be appreciated that other ways of forming the aggregated motion data may be used as well. As an example, a weighted average may be used. Moreover, any outliers among the 3D points in the subset of 3D points may be removed for improved results. Additionally, a standard deviation of the 3D points within the subset of 3D points can be used as a confidence score.

The method 100 may further comprise providing S126 the free-space estimation to a trajectory planning module configured to generate candidate trajectories of the vehicle. The candidate trajectories may thus be generated based on the free-space estimation.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

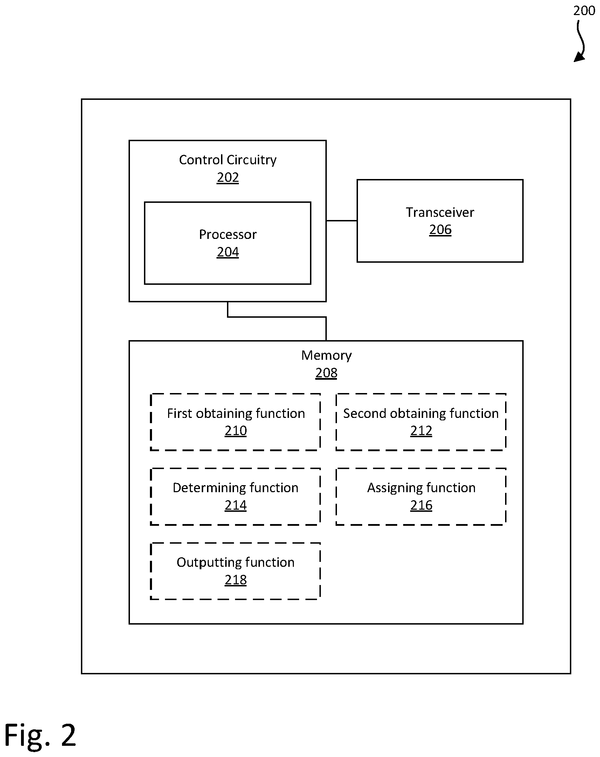

Figure 2 is a schematic illustration of a device 200 in accordance with some embodiments. The device 200 (may also be referred to as computing device) may refer to any general-purpose computing device configured to perform the techniques described herein. The device 200 may for instance be configured to perform the method 100 as described in connection with Fig. 1.

Even though the device 200 is herein illustrated as one device, the device 200 may be a distributed computing system, formed by a number of different computational devices.

The device 200 comprises control circuitry 202. The control circuitry 202 may physically comprise one single circuitry device. Alternatively, the control circuitry 202 may be distributed over several circuitry devices.

As shown in the example of Fig. 2, the device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the device 200. The control circuitry 202 may include a processor 204, such as a central processing unit (CPU), microcontroller, or microprocessor. The processor 204 may be configured to execute program code stored in the memory 208, in order to carry out functions and operations of the device 200. The control circuitry 202 is configured to perform the steps of the method 200 as described above in connection with Fig. 2. The steps may be implemented in one or more functions stored in the memory 208.

The transceiver 206 is configured to enable the device 200 to communicate with other entities, such as vehicles or other devices. The transceiver 206 may both transmit data from and receive data to the device 200.

The memory 208 may be a non-transitory computer-readable storage medium. The memory 208 may be one or more of a buffer, a flash memory, a hard drive, a removable media, a volatile memory, a non-volatile memory, a random-access memory (RAM), or another suitable device. In a typical arrangement, the memory 208 may include a non-volatile memory for long-term data storage and a volatile memory that functions as system memory for the device 200. The memory 208 may exchange data with the circuitry 202 over the data bus. Accompanying control lines and an address bus between the memory 208 and the circuitry 202 also may be present.

Functions and operations of the device 200 may be implemented in the form of executable logic routines (e.g., lines of code, software programs, etc.) that are stored on a non-transitory computer readable recording medium (e.g., the memory 208) of the device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the device 200 is described.

The control circuitry 202 is configured to obtain an image sequence captured by an image capturing device of the vehicle. The image sequence comprises a plurality of images depicting a scene at a respective time instance of a plurality of time instances. This may be performed e.g. by execution of a first obtaining function 210.

The control circuitry 202 is further configured to obtain a set of 3D points based on a depth map of the scene depicted in the image sequence. Each 3D point of the set of 3D points is associated with a three-dimensional position of the 3D point within the scene. This may be performed e.g. by execution of a second obtaining function 212. It is to be appreciated that the first and second obtaining function 210, 212 may be implemented by a common obtaining function. Such variation depends on a specific implementation.

The control circuitry 202 is further configured to determine motion data associated with each 3D point of the set of 3D points. The motion data is indicative of an estimated motion of an object in the scene associated with the 3D point. This may be performed e.g. by execution of a determining function 214. The motion data associated with each 3D point is determined by obtaining a 2D point in the image plane of an image of the image sequence corresponding to the 3D point, applying an optical flow between the image and a subsequent image of the sequence of images, to the 2D point, thereby obtaining a subsequent 2D point in an image plane of the subsequent image, determining a subsequent 3D point by projecting the subsequent 2D point based on the depth map of the scene, and determining the motion data based on a difference between the three-dimensional position of the 3D point and the subsequent 3D point.

The control circuitry 202 is further configured to assign the set of 3D points with associated motion data to a free-space estimation of the scene, based on the three-dimensional position associated with each 3D point. This may be performed e.g. by execution of an assigning function 216.

The control circuitry 202 may be further configured to output the free-space estimation to a trajectory planning module configured to generate candidate trajectories of the vehicle. This may be performed e.g. by execution of an outputting function 218.

It should be noted that the principles, features, aspects, and advantages of the method 100 as described above in connection with Fig. 1, are applicable also to the device 200 as described herein. In order to avoid undue repetition, reference is made to the above.

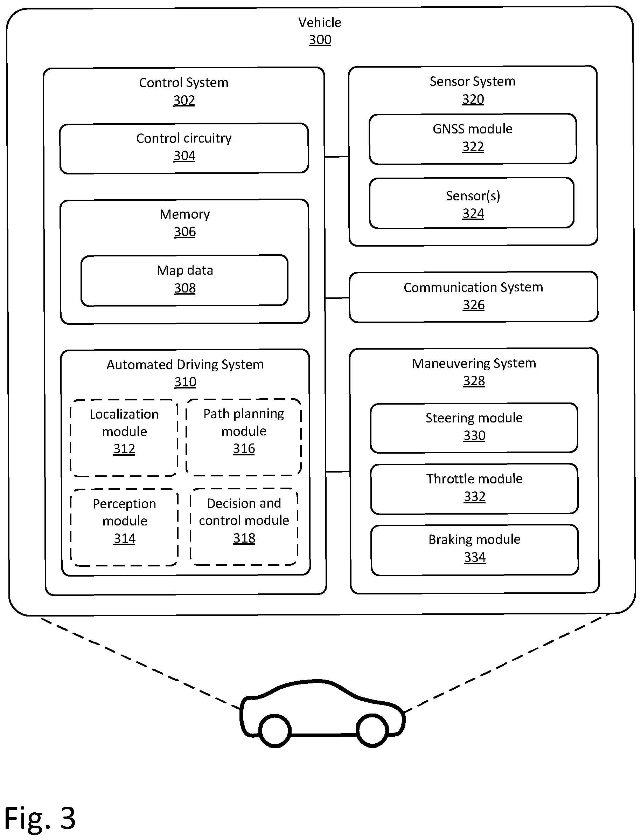

Figure 3 is a schematic illustration of a vehicle 300 in accordance with some embodiments. The vehicle 300 is equipped with an Automated Driving System (ADS) 310. As used herein, a "vehicle" refers to any form of motorized transport. For example, the vehicle 300 may be any road vehicle such as a car (as illustrated herein), a motorcycle, a (cargo) truck, a bus, a smart bicycle, etc.

The vehicle 300 comprises a number of elements (e.g. the different systems and modules represented by the illustrated boxes in Fig. 3) which can be commonly found in autonomous or semi-autonomous vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 may comprise high-definition (HD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an some embodiments, any distributed or local control circuitry device may be utilized in the realization of the present inventive concept.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as an image capturing device (e.g. one or more cameras), LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 300.

The vehicle 300 further comprises a communication system 326. The communication system 326 is configured to communicate with external units, such as other vehicles (i.e. via vehicle-to-vehicle (V2V) communication protocols), remote servers (e.g. cloud servers, fleet servers, etc.), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output to a remote location (e.g. remote operator or control center) by means of the one or more antennas. Moreover, the communication system 326 may be further configured to allow the various elements of the vehicle 300 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As stated above, the vehicle 300 comprises an ADS 310. The ADS 310 may be part of the control system 302 of the vehicle. The ADS 310 is configured to carry out the functions and operations of the autonomous (or semi-autonomous) functions of the vehicle 300. The ADS 310 can comprise a number of modules, where each module is tasked with different functions of the ADS 310.

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. The perception module 314 may be configured to determine a free-space estimation based on sensory data. Moreover, the perception module 314 may be configured to perform the functions of the method 100 as described above in connection with Fig. 1. These functions may be implemented in a separate device provided in the vehicle 300, such as the device 200 as described above in connection with Fig. 2. Alternatively, the functions may be distributed over one or more modules, systems, or elements of the vehicle 300, as is readily understood by the person skilled in the art. For example, the control circuitry 304 of the control system 302 may be configured to perform the steps of the method 100. The device 200 may thus be distributed within the vehicle 300 and may for example share its control circuitry with the control circuitry 304 of the control system 302.

The localization module 312 and/or the perception module 314 may be communicatively connected to the sensor system 320 in order to receive sensor data (e.g. images) from the sensor system 320 (e.g. from cameras of the sensor system 320). The localization module 312 and/or the perception module 314 may further transmit control instructions to the sensor system 320.

The ADS may further comprise a path planning module 316 (also referred to as trajectory planning module). The path planning module 316 is configured to determine a planned path (or candidate trajectory) of the vehicle 300 based on a perception and location of the vehicle as determined by the perception module 314 and the localization module 312 respectively. A planned path determined by the path planning module 316 may be sent to the maneuvering system 328 for execution. The path planning module 316 may utilize the free-space estimation with assigned motion data to determine the planned path.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not. The decision and control module 318 may be further configured to detect any evasive maneuvers of the vehicle, such as deviations from the planned path, or expected trajectory of the path planning module 316. This includes both evasive maneuvers performed by the ADS 310 and by a driver of the vehicle.

It should be understood that parts of the described solution may be implemented either in the vehicle 300, in a system located external to the vehicle, or in a combination of internal and external to the vehicle; for instance, in a server in communication with the vehicle, a so-called cloud solution. The different features and steps of the embodiments may be combined in other combinations than those described. Further, the elements of the vehicle 300 (i.e. the systems and modules) may be implemented in different combinations than those described herein.

Figure 4A illustrates, by way of example, a surrounding environment of a vehicle 402 in perspective view. The vehicle 402 may also be referred to as an ego vehicle 402. The vehicle 402 may be a vehicle 300 as described above in connection with Fig. 3.

Figure 4B illustrates, by way of another example, a surrounding environment of the vehicle 402 in side view. More specifically, Fig. 4A and 4B illustrates examples of how a free-space estimation can be represented, and provides an example of some principles of the present technology. These illustrations mainly serve the purpose of providing improved understanding of the presently disclosed technology, and should not be seen as limiting. For this reason, the illustrations should be seen as simplified examples of a real-world scenario.

The vehicle 402 comprises an image capturing device, herein illustrated as a camera 404. The camera 404, in the present example, has a field of view 420 in a forward direction of the vehicle. However, it should be appreciated that the principles of the present disclosure can be applied to any direction of the vehicle. For example, rear- or side-facing cameras may also be used. This allows for free-space estimation in any space around the vehicle.

In the illustrated example, the camera 404 is provided externally to the vehicle 402. It should however be appreciated that the camera 404 may be provided internally to the vehicle 402, at any suitable position (e.g. integrated within a body of the vehicle). Moreover, the vehicle 402 may comprise additional cameras, as well as other types of sensors, as explained above e.g. in connection with Fig. 3.

The camera 404 is configured to capture images of a scene of the surrounding environment of the vehicle 402. More specifically, the camera 404 is configured to capture an image sequence as described above. In the present example, the vehicle 402 is travelling along a dual carriageway defined by a first and second road boundary 418a, 418b, and a lane divider 418c.

In the surrounding environment in front of the ego vehicle 402, a first and second vehicle 416a, 416b is present. The first and second vehicle 416a, 416b herein represents possible obstacles that limits the free-space of the ego vehicle 402. It should be noted that the obstacles might be any type of stationary or moving object, such as other vehicles, cyclists, pedestrians, animals, road construction signs, traffic cones, buildings etc.

Fig. 4A further shows a representation of a free-space estimation. The free-space representation in the illustrated example comprises an occupancy grid 406. The occupancy grid 406 comprises a plurality of cells (or grid cells) 410. The occupancy grid 406 lies in an estimated ground plane of the depicted surrounding environment. A part of the occupancy grid 406 is herein shown in dashed lines for illustrative purposes. As one way of seeing it, the occupancy grid 406 divides the ground plane into a number of neighboring cells 410. It is to be noted that the occupancy grid 406 may span over a larger or smaller area than the illustrated portion of the occupancy grid 406.

For illustrative purposes, the cells 410 of the occupancy grid 406 is herein depicted as evenly sized rectangles. It should however be appreciated that the size and shape of the cells 410 are not limited to those depicted herein. For example, the cells 410 may have any polygonal shape. Further, the present example illustrates that the occupancy grid 406 may have a uniform cell size. However, in some embodiments, the occupancy grid 406 may have a varying cell size. As an example, the cell size may increase with a distance from the vehicle 402. In other words, the occupancy grid 406 may have larger sized cells 410 further away from the camera 404 compared to cells 410 closer to the camera 404. A smaller cell size may increase accuracy and resolution of the estimated free-space, but it also leads to a greater number of cells, and thus increased computational resource requirements. Having smaller sized cells close to the vehicle, and larger sized cells farther away from the vehicle 402 may be advantageous in that it provides for a relatively high accuracy/resolution in the close vicinity of the vehicle 402, which is of importance when determining a route of the vehicle 402. At the same time, the computational resource requirement can be reduced by allowing a lower accuracy/resolution in the farther distance, which is of less relevance.

To describe the free and non-free space, the cells 410 of the occupancy grid 406 may be classified as either corresponding to free-space or to non-free space. For illustrative purposes, this is shown by checkmarks (corresponding to free-space, or drivable space) and crosses (corresponding to non-free space, or occupied space) for some of the cells 410. How the cells 410 are determined as free or not can be done in several different ways known in the art, such as sensor data interpretation, machine learning based segmentation techniques, etc. As the present technology can be implemented using any suitable technique, this will not be further elaborated upon herein.

Turning now to Fig. 4B, which illustrates a surrounding environment in side view. More specifically, Fig. 4B illustrates principles of the present technology relating to the assignment of motion data to the free-space estimation. Fig. 4B shows the ego vehicle 402 having a forward-facing camera 404. In front of the ego vehicle 402 is a further vehicle 416. Hence, the vehicles 402, 416 illustrated herein are travelling in a direction from left to right.

Fig. 4B further illustrates a set of 3D points 412 overlaid in the scene. Each 3D point 412 is associated with motion data, represented by the arrows connected to a respective 3D point. The arrow representing the motion data may thus indicate a direction (direction of arrow) and magnitude (length of arrow) of the motion. The plurality of 3D points 412 are to be understood as 3D points with associated motion data determined by means of the method 100 as described in the foregoing.

Further shown in Fig. 4B is an occupancy grid 406, herein represented by dashed lines. The vertical dashed lines divide the occupancy grind into a plurality of cells 410. As Fig. 4B is shown in side view, the occupancy grid 406 is shown in one dimension. It is however to be appreciated that the occupancy grid 406 may be in two or more dimensions, e.g. as shown in Fig. 4A. Moreover, the plurality of cells 410 of the occupancy grid 406 may be classified as either free (check marks) or non-free (crosses) space.

The set of 3D points 412 with associated motion data can be assigned to the free-space estimation (in this case to the occupancy grid) based on their three-dimensional position. In the one-dimensional case illustrated herein, this means that the 3D points are assigned to a cell of the plurality of cells 410 which corresponds to the distance from the camera 404 to the 3D point.

In case more than one 3D points are assigned to one cell, an aggregated motion data can be assigned to said cell. The aggregated motion data is thus an aggregation of the motion data associated with the 3D points assigned to said cell. The aggregated motion data is herein illustrated by the arrows in dashed lines.

In some embodiments, the motion data is constricted so as to be parallel with an estimation of the ground plane 408. Moreover, the ground plane may be estimated as several individual ground planes, so as to capture any level changes in the surrounding environment. This is herein illustrated by the aggregated motion data, as indicated by the dashed line arrows, are parallel with the ground plane 408 at a location corresponding to the respective cells.

In some embodiments, the motion data is assigned to a free-space boundary 414, herein represented by a vertical line in dash-dot pattern. The free-space boundary can be seen as a border between free-space and non-free-space. In some embodiments, the free-space boundary 414 is defined by a line (or a plane perpendicular to the ground plane in the 2D case of the occupancy grid 406) at a certain coordinate. In such case, the aggregated motion data may be determined based on a subset of 3D points located within a defined distance from the free-space boundary 414. In another example, the free-space boundary 414 may be defined by the cells located at the border between free and non-free space. In such case the aggregated motion data may be determined based on a subset of 3D points assigned to said cells.

In the illustrated example, the motion data is indicative of a relative motion between objects in the scene and the ego vehicle 402. Thus, motion data of 3D points associated with the ground will indicate a motion more or less the same as the motion of the ego vehicle 402. If for instance the ego vehicle 402 is travelling at 40 km/h, said 3D points will appear to be moving towards the camera 404 at about the same speed. The further vehicle 416 of the present example travels in a same direction as the ego vehicle 402, but at a lower speed. Say for example that the further vehicle 416 travels at 30 km/h. Any 3D points associated with the further vehicle 416 may thus appear to be moving towards the camera 404 of the ego vehicle 402 at about 10 km/h. Thus, the arrows representing the motion data appears shorter for the 3D points associated with the further vehicle 416, than those associated with the ground. It is however to be appreciated that the motion data may be indicative of a relative motion between the objects and the ground, by considering the motion of the ego vehicle 302, as has been explained above.

As is readily understood by the person skilled in the art, the present inventive concept is in no way limited by the illustrative example of Fig. 4A and 4B. For example, the free-space estimation may be performed in any driving scenario, such as one-way streets, single carriageways with oncoming traffic, multi carriageways, parking lots, intersections, roundabouts, etc. Further, the sizes and shapes of the illustrated elements may not be representative of a real-world scenario, but rather be seen as a non-limiting example for illustrative purposes.

It goes without saying that, even though illustrated in the physical surrounding environment of the vehicle 402, the set of 3D points 412, the occupancy grid 406 and the free-space boundary 414 are something that is implemented virtually, in whatever device performs the techniques of the method 100. In Fig. 4A and 4B, these elements are shown as overlaid onto the physical surrounding environment for illustrative purposes only.

The present technology has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100), performed in a vehicle equipped with an automated driving system, the method (100) comprising:
obtaining (S102) an image sequence captured by an image capturing device of the vehicle, wherein the image sequence comprises a plurality of images depicting a scene at a respective time instance of a plurality of time instances;
obtaining (S104) a set of 3D points based on a depth map of the scene depicted in the image sequence, wherein each 3D point of the set of 3D points is associated with a three-dimensional position of the 3D point within the scene;
determining (S106) motion data associated with each 3D point of the set of 3D points, wherein the motion data is indicative of an estimated motion of an object in the scene associated with the 3D point, wherein the motion data associated with each 3D point is determined (S106) by:
obtaining (S108) a 2D point in the image plane of an image of the image sequence corresponding to the 3D point;
applying (S110) an optical flow between the image and a subsequent image of the sequence of images, to the 2D point, thereby obtaining a subsequent 2D point in an image plane of the subsequent image;
determining (S112) a subsequent 3D point by projecting the subsequent 2D point based on the depth map of the scene; and
determining (S114) the motion data based on a difference between the three-dimensional position of the 3D point and the subsequent 3D point; and
assigning (S116) the set of 3D points with associated motion data to a free-space estimation of the scene, based on the three-dimensional position associated with each 3D point.

2. The method (100) according to claim 1, wherein determining (S106) the motion data further comprises obtaining an estimation of a ground plane of the scene depicted in the sequence of images, and
wherein the motion data is determined (S106) as a motion parallel to the estimated ground plane.

3. The method (100) according to claim 1 or 2, wherein the depth map is based on an output of a machine learning model configured to determine a depth map based on an image sequence as input.

4. The method (100) according to claim 2 or 3, wherein the depth map is based on a LIDAR point cloud of the scene.

5. The method (100) according to any one of the claims 1 to 4, wherein the motion data is indicative of an estimated motion of the object in the scene associated with the 3D point, relative a motion of the vehicle.

6. The method (100) according to any one of the claims 1 to 5, wherein the motion data is determined (S106) further based on vehicle motion data of the vehicle, and
wherein the motion data is further indicative of an estimated motion of the object in the scene associated with the 3D reference point relative the ground.

7. The method (100) according to any one of the claims 1 to 6, wherein the motion data comprises information pertaining to a velocity of the object in the scene.

8. The method (100) according to any one of the claims 1 to 7, wherein assigning (S116) the set of 3D points with associated motion data to the free-space estimation of the scene comprises:
assigning (S118) each 3D point of the set of 3D points to a cell of a plurality of cells in an occupancy grid of the free-space estimation, based on the three-dimensional position of the 3D points, and
assigning (S120), to each cell in the occupancy grid, aggregated motion data based on the motion data associated with the 3D points assigned to the respective cell.

9. The method (100) according to any one of the claims 1 to 8,
wherein assigning (S116) the 3D points with associated motion data to the free-space estimation of the scene comprises:
selecting (S122) a subset of the set of 3D points corresponding to a free-space boundary of the free-space estimation, and
assigning (S124) aggregated motion data to the free-space boundary based on the subset of 3D points.

10. The method (100) according to any one of the claims 1 to 9, further comprising providing (S126) the free-space estimation to a trajectory planning module configured to generate candidate trajectories of the vehicle.

11. A computer program product comprising instructions, which when the program is executed by a computing device, causes the computing device to carry out the method (100) according to any one of the claims 1 to 10.

12. A device (200) comprising control circuitry (202) configured to:
obtain an image sequence captured by an image capturing device of the vehicle, wherein the image sequence comprises a plurality of images depicting a scene at a respective time instance of a plurality of time instances;
obtain a set of 3D points based on a depth map of the scene depicted in the image sequence, wherein each 3D point of the set of 3D points is associated with a three-dimensional position of the 3D point within the scene;
determine motion data associated with each 3D point of the set of 3D points, wherein the motion data is indicative of an estimated motion of an object in the scene associated with the 3D point, wherein the motion data associated with each 3D point is determined by:
obtaining a 2D point in the image plane of an image of the image sequence corresponding to the 3D point;
applying an optical flow between the image and a subsequent image of the sequence of images, to the 2D point, thereby obtaining a subsequent 2D point in an image plane of the subsequent image;
determining a subsequent 3D point by projecting the subsequent 2D point based on the depth map of the scene; and
determining the motion data based on a difference between the three-dimensional position of the 3D point and the subsequent 3D point; and
assign the set of 3D points with associated motion data to a free-space estimation of the scene, based on the three-dimensional position associated with each 3D point.

13. The device (200) according to claim 12, wherein the control circuitry (202) is further configured to output the free-space estimation to a trajectory planning module configured to generate candidate trajectories of the vehicle.

14. A vehicle (300) equipped with an automated driving system, the vehicle (300) comprising:
an image capturing device, and
the device (200) according to claim 12 or 13.
